# EUROPEAN PATENT APPLICATION

(11) **EP 1 148 303 A2**
(43) Date of publication of application: **24.10.2001**
(21) Application number: 01303468.1
(22) Date of filing: 12.04.2001
(51) Int. Cl.: F24F 3/147, F24F 12/00

(54) **Method and device for local heating with regenerative heat recovery**

(30) Priority: 18.04.2000 SI 200000100
(71) Applicant: E.M. Tronic d.o.o, 2000 Maribor (SI)
(72) Inventor: Jerenec, Vili, 2250 Ptuj (SI)
(74) Representative: Wolff, Francis Paul

(57) **Abstract**

A system for individual local ventilation uses a rotating regenerator (heat exchanger) (1) for heat recovery from used air. The system works continuously and is fixed in an outer wall or ceiling. In addition to the normal fresh air flow (I) and used air flow (II), there is also provided a countercondesation air flow (III) which warms up the regenerator (1) to prevent condensing moisture blocking the regenerator (1). The system also allows for partial or complete backdraft operation by controlling the rate of rotation of regenerator (1). Two fan and three fan embodiments are provided.

## Description

The present invention relates to atmospheric control in buildings.

The present invention relates to the technical problems encountered in ventilation of the interior of a building, increasing thermal efficiency by exchanging the heat of recycled air, continuous operation, and the preventing of freezing, and particularly relates to ventilation systems that are modular, insulated, having good sealing properties and enable control of humidity in the interior.

During ventilation one should take into account that during winter months the outer, fresher, air enters with a temperature below freezing point. This temperature causes freezing of condensate which can be found in the cellular structure (e.g. honeycomb structure) of known regenerators. This fouls the system. The first goal of the invention, is to prevent, or significantly to decrease, such freezing.

The outer wall of the invention must be protected to prevent loss of heat into the environment, at the same time providing sufficient structural integrity and having low weight and resistance to dilatation.

In addition, ergonomic criteria calling for appropriate humidity in the interior of the building served by HVAC system should be taken into account, requiring the air to be humidified.

Several solutions have been provided for ventilation which employ partial recovery of otherwise lost heat using reverse flows. One solution is the well known central ventilation system which offers several advantages. However, a large system can absorb high investment costs and needs many air distribution ducts.

The second solution, as found in the state of the art, is found in local ventilation systems with heat recovery, as follows:
(a) recuperators with relatively low efficiency (up to 50% in single stage), which also need a system for preheating at low temperatures using electrical energy due to the danger of freezing. At the same time they have some deficiencies in the area of humidity control.
(b) regenerators, as follows:
   with alternate modes of operation with good energy efficiency, however with highly varied temperature of fresh air. During low outside temperatures they need backdraft (backdraft is a term used to describe flow of air above freezing temperature through the cellular structure in order to melt the frozen condensate and/or carry out the liquid condensate) because of freezing danger The backdraft lowers the efficiency and causes problems with humidity control. Alternatively, preheating (usually with electrical heaters) can be used.
   with concurrent operation (for the purposes of this application also known as continuous operation) whereby the rotating cellular structure is exposed alternately to warm, and then cold air which enables heat transfer. However, this approach is prone to freezing and resulting blockage of air flow through the cellular structure.

The subject of new invention is a method and device for local regenerative heating and solves the above presented problem with a design of a system for individual local ventilation using regenerative principles and heat recovery. The system is worked continuously and can be placed in the wall, preferably outer wall or into the ceiling.

The main advantages of the new invention are:
- the invention is operated locally and does need high investments in infrastructure
- it can be easily installed into new or rebuilt buildings or other rooms whereby the rooms can be earmarked for either residential or warehousing purposes as long as the interior environment requires constant temperature or humidity;
- the invention provides for modular arrangement as the device can be a combination of units (modules) which provides for easy maintenance and assembly;
- total amount of air exchanged can be achieved with continuous or discontinuous regulation of fans velocity and with switching of the device on and off;
- the invention uses insulation material both for preventing heat loss into the environment and as a construction element;
- the invention provides for appropriate sealing of the cellular structure of the regenerator both in axial and radial directions;
- the invention provides for appropriate connection and/or bearing of the cellular structure;
- the invention provides for appropriate protection against low temperature and/or freezing and usually does not need to use preheating or backdraft;
- the invention provides for humidity control within the rooms ventilated;
- the invention operates in a continuous fashion.

Essentially, the subject of the invention is designed as a rotated cellular structure, said cellular structure rotating around its main axis and being exposed to air exiting from the interior for some of the time to enable the cellular structure to heat up, and to air entering the interior for rest of the time in order to heat up this air (to recover some of the heat which would otherwise by lost to the environment. For purposes of this application the entering air will also be called "fresh air", and the exiting air also called "used air". This device and method is not limited to air only, rather, it can be applied to other gas in need of heating and/or cooling and humidity control.

In addition to both air flows (fresh and used) described above, there is a third flow of so called countercondensing air. This countercondensing flow is essentially parallel to the flow of the fresh air, and is used for reduction or prevention of freezing.

The method of warming (or heating) of fresh air is comprised of the following steps:
- exit of warm, humid air from the interior through the cellular structure rotating in the housing;
- entrance of cold, outside air through the cellular structure which has been previously heated by exiting air;
- recirculation of warm (either humid or dry) air in parallel to the cold, outside, air whereby this air flow is known as countercondensing flow or countercondensing air for the purposes of this application.

The structure of the invention may be manufactured of insulation material with appropriate structural integrity characteristics and can be positioned into the outside housing which can be either wooden or made of material with appropriate decorative characteristics (included but not limited to thermoplastics).

The subject of this invention in a particular embodiment comprises an anti-freezing system to prevent freezing (hereinafter denoted with the abbreviation AFS). The AFS is a specific thermodynamic and constructional solution for splitting and directing air flows through the regenerator in such a way that even if the temperatures falls below freezing the cells comprising the cellular structure do not freeze and do not block the flow path. In addition, the AFS generally prevents freezing without backdraft or reduction of angular velocity of the cellular structure. With SAT the air flow is divided into at least three flows. In between flows of exit and entrance air (i.e. used and fresh air) there is an input flow of countercondensing air which removes condensate from the cellular structure. Depending on whether the countercondensing air is drier than the used air, or more humid than the used air, the mechanism of removal of condensate can be either mostly mass convection combined with mass diffusion (evaporation) or mostly mass convection. The particular mechanism for freezing prevention is, regardless of the type of heating air employed, additional heating of the cellular structure at its otherwise not sufficiently heated exit part. The effect of freezing prevention can also be combined, which should not be construed as a limitation of the invention.

Considering that the countercondensing air does not significantly cool down, this use of air does not present significant energy loss while it presents limitation of the capacity of the whole system. Hence, the fraction of volumetric flow should be adjusted for local climate (e.g. in milder winters the fraction of countercondensing air should be smaller, and it harsher environment it should be larger).

The AFS can be used for humidity control of the interior through several mechanisms: using switching on and off of the system, regulation of angular velocity of the cellular structure, regulation of the fan, and any combination of these mechanisms. The humidity in the interior can be reduced using backdraft at an appropriate level for an appropriate time and then maintaining it using above described combination of switching on/off, regulation of angular velocity of cellular structure, and regulation of at least one fan. The production of humidity in the interior (e.g. by cooking, washing, etc.) can be controlled and even removed using the AFS because the fresh air has lower absolute humidity than used air (note that during heating up the relative humidity of the air decreases).

Table 1 shows the regimes of the AFS according to the relative humidity of the ventilated interior and the temperature of exterior air.

**Table 1.**

| Regime of AFS operation. | | | |
|---|---|---|---|
| outside temperature | Relative humidity of interior | | |
| | very high (>65%) | high (50%-65%) | appropriate (35%-50%) |
| >0°C | (partial) backdraft, without AFS | partial backdraft, without AFS | optimum angular velocity of regenerator taking into account efficiency, without AFS |
| 0°C do -6°C | (partial) backdraft, with AFS | partial backdraft, with AFS | optimum angular velocity of regenerator taking into account efficiency, with AFS |
| -6°C do - 16°C | (partial) backdraft, with AFS | partial backdraft, with AFS | optimum angular velocity of regenerator taking into account efficiency, with AFS |
| <-16°C | (partial) backdraft, with AFS | partial backdraft, with AFS | partial backdraft, with AFS |

The subject of the invention can also be used for other gases, in particular in cooling systems.

The new invention is described in more detail below with a description of embodiments and drawings whereby the drawings make integral part of this patent application and show:

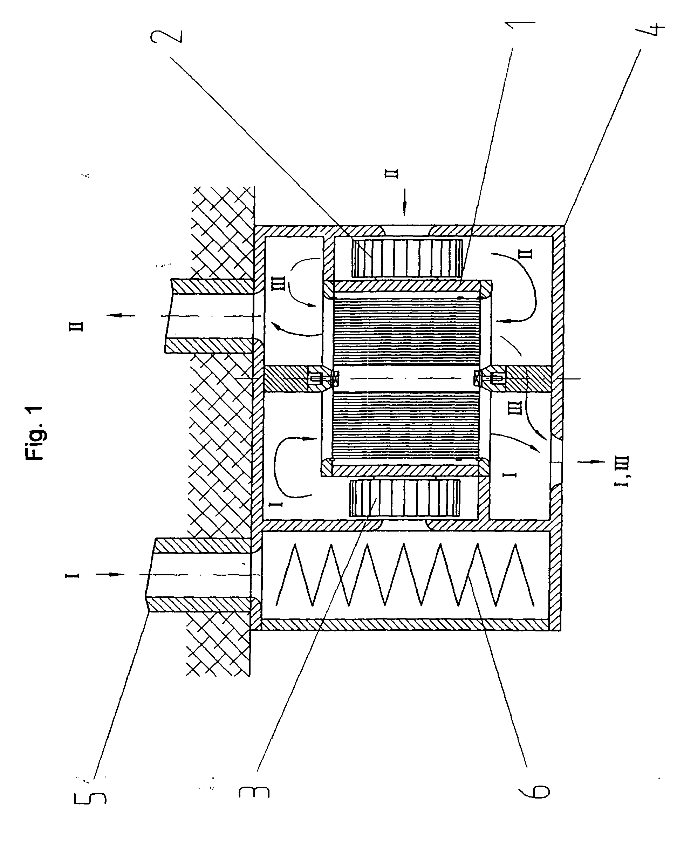

Figure 1 shows axial cross section of the device for ventilation comprised of a module with a regenerator and driving mechanism (1), a fan for propelling used air and countercondensing air (2), a fan for propelling fresh air (3), a module being a structure made of insulation material with appropriate construction properties (4) (such as strength of material etc.), connecting pipes through a wall (5), preferably an outer wall or a ceiling, a fresh air filter (6), a flow of fresh air (I), a flow of used air (II), and a flow of countercondensing air (III).

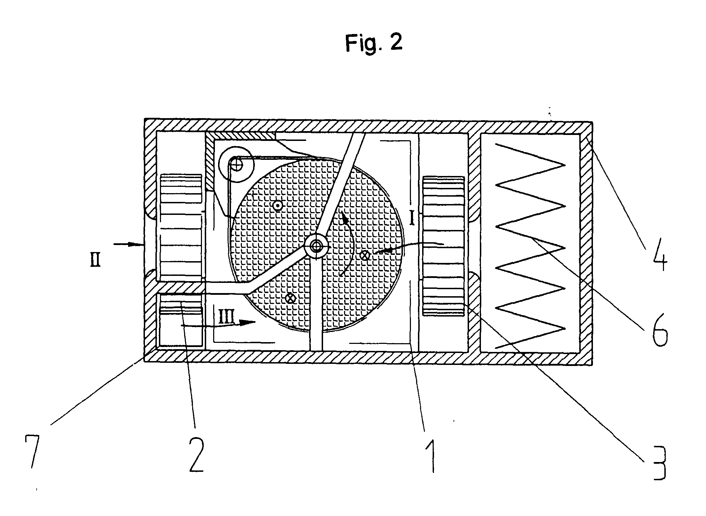

Figure 2 shows a cross section of the device from the viewpoint of entering air whereby the symbol ⊗ stands for air flow perpendicularly into the page, and the symbol comprising a dot in a circle stands for flow of air perpendicular out of the page, said device comprising the module with the regenerator and the driving mechanism (1), the fan for propelling of used air and countercondensing air (2), the fan for propelling fresh air (3), the module being a structure made of insulation material with appropriate construction properties (4) (such as strength of material etc.), connecting pipes through the wall (5), preferably the outer wall of the ceiling, the fresh air filter (6), the flow of fresh air (I), the flow of used air (II), and the flow of countercondensing air (III).

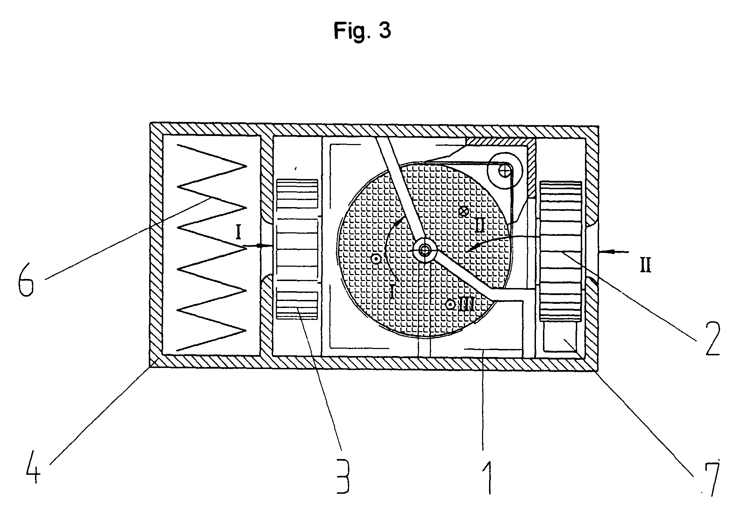

Figure 3 shows cross section of the device from the viewpoint of exiting air (used air) whereby the symbol ⊗ stands for air flow perpendicular into the page, and the symbol comprising a dot in a circle stands for a flow of air perpendicular out of the page, said device comprising the module with the regenerator and the driving mechanism (1), the fan for propelling used air and countercondensing air (2), the fan for propelling fresh air (3), the module being a structure made of insulation material with appropriate construction properties (4) (such as strength of material etc.), connecting pipes through the wall (5), preferably the outer wall of the ceiling, the fresh air filter (6), the flow of fresh air (I), the flow of used air (II), and the flow of countercondensing air (III).

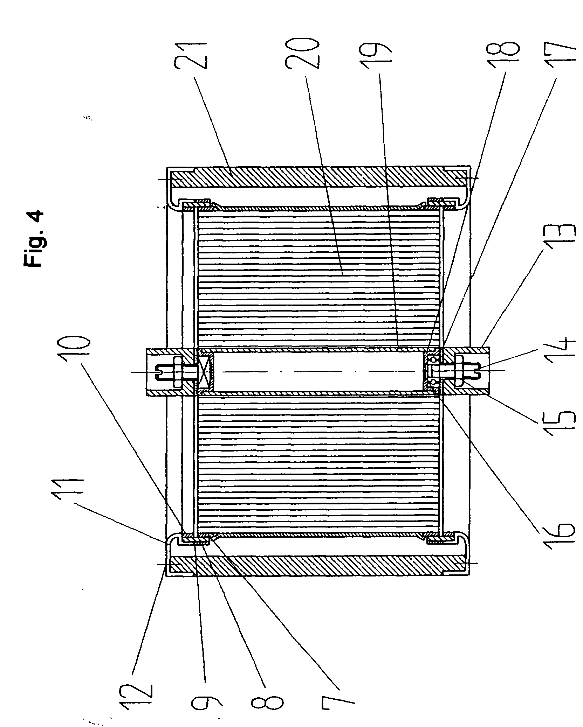

Figure 4 shows embodiment of the radial seal and comprises: a ring (7), preferably made of man made material such as plastics and fitting tightly onto a cellular structure, said cellular structure preferably being made of aluminum; a gasket, preferably of cloth and preferably in form of an infinite strip (8); an elastic ring (9), preferably of rubber or some other elastomer, said elastic ring (9) exerting force on the gasket (8) and the ring (7); a ring (10) pressing the gasket (8) against a cover (11), said ring (10) being preferably of man made material; the cover (11), preferably of injection molded man made material (11); a connecting means element, preferably being a bolt for connection of the cover (11) onto a structure (12).
Figure 4 also shows the embodiment of the axial seal and comprises: a supporting wall, preferably of man made material and which serves as a support for the cellular structure, as a support for axial gasket, and as a wall to limit the air flow (13); connecting means, preferably a bolt, for adjustment of the axial tolerance of a gasket (14); connecting means, preferably a nut (15); a bearing, preferably a ball bearing (16); an axial gasket (17), preferably in form of a brush or brush-like cloth such as velvet connected to the supporting wall (13) and preferably glued thereto; a cover for a cartridge, serving also as a bearing support and preferably made of man made material such as plastics (18); a cartridge, preferably of man made material such as plastics (19); the cellular structure, preferably of aluminum foil (20); a supporting structure for the regenerator module (21); and an outer layer (22).

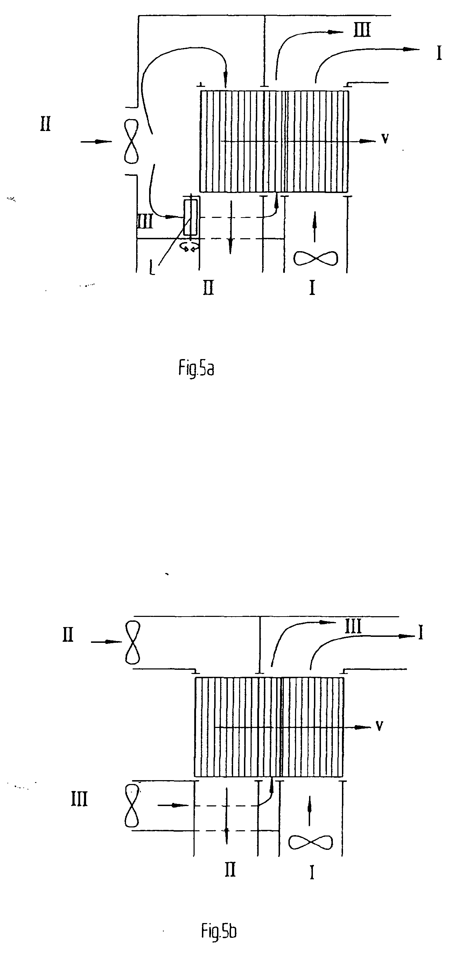

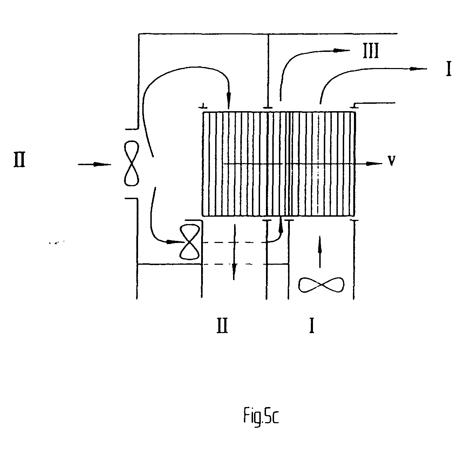

Figure 5a shows the AFS with two fans showing fresh air flow (I), used air flow (II), countercondensing air flow (III), direction of cellular structure rotation (v), flow directing means for opening and closing the countercondensing flow (L) (an embodiment without flow directing means (L) is also possible, resulting in the permanent presence of countercondensing flow thus reducing efficiency, but contributing to a simpler design.
Figure 5b shows the AFS with three fans whereby a fan propels countercondensing air (III) in parallel to fan of flow (II) showing fresh air flow (I), used air flow (II), countercondensing air flow (III), and direction of cellular structure rotation (v).
Figure 5c shows an AFS with three fans (fan of air flow (III) sequentially with fan of flow (II)) showing fresh air flow (I), used air flow (II), countercondensing air flow (III), and direction of cellular structure rotation (v).
Figure 6a shows temperature zones in an AFS found during an optimum regime of operation showing fresh air flow (I), used air flow (II), countercondensing air flow (III), and direction of cellular structure rotation (v).
Figure 6b shows temperature zones in an AFS during a non-optimum regime of operation where there is a lower angular velocity of rotation than in the optimum regime of operation ( the non-optimum regime also being known as regime of partial backdraft) showing the fresh air flow (I), the used air flow (II), the countercondensing air flow (III), and the direction of cellular structure rotation (v).
Figure 6c shows temperature zones in an AFS during a backdraft regime in which the angular velocity is even lower than in figure 6b showing the fresh air flow (I), the used air flow (II), the countercondensing air flow (III), and the direction of the cellular structure rotation (v).

The first embodiment is of a device for ventilation with the regenerator and the driving mechanism (1) comprised of the fan for used air flow and for countercondensing air flow (2), the fan for fresh air flow (3), the structural module of insulation material with appropriate structural properties (4), the connecting pipes through the wall, preferably the outer wall or the ceiling (5), the fresh air filter (6), the fresh air flow (I), the used air flow (II), and the countercondensing air flow (III). The fresh air enters through the an opening in front of the fresh air fan (3) which propels the air through the cellular structure (20).

The cellular fraction (20) is, in the embodiment, made of double aluminum foil where one of them is smooth, and the other is wavy thereby achieving passage for air. Both foils are laid one atop another and coiled (spun) around the cartridge (19) in the form of a spiral. Said cartridge is preferably of plastics, however, other materials may be used as well as long as the material features appropriate material properties. The number of loops can be different, however, the spiral should be produced in such a way that the final shape is essentially a cylinder. In this embodiment the cylindrical shape is achieved by the height of the waves of the foil in the first and the last loop (the height of the waves is linearly increased in the first loop and linearly decreased in the last loop). A ring (7) can be attached around the finished cylinder which further provides for the cylindrical structure shape. The ring (7) is kept in position by being tight fitting and/or by adhesives or other connecting means. In this embodiment the inventors believe that the best results are achieved by alignment of the front part of the cellular structure (20), the cartridge cover (18), and the ring (7).

Instead of aluminum foil one may utilize other material with comparable thermal properties (heat transfer conductivity, specific heat ...) and comparable strength of material properties.

In the particular embodiment a foil of thickness between 0,02 to 0,10 mm and perforation between 6 to 11% is chosen, the best results being expected using foil of thickness between 0,03 and 0,05 mm. If pressure losses between 300 and 700 Pa/m are estimated, then good energy efficiency can be achieved, the efficiency expected being between 85% and 90%.

The cellular structure is surrounded by the outer layer (22). In this embodiment, the outer layer is comprised of material which enables a good hold to be achieved between the outer layer and a driving mechanism, preferably a belt, connected to an engine or electric motor, and providing an appropriate radial sealing mechanism. Appropriate material can be an elastomer such as rubber or some form of polymer whereby the polymer is applied in its liquid form to later solidify. The cellular structure is connected to the supporting structure (21), preferably made of rigid foam with insulation properties. The supporting structure (21) provides for insulation of the module, protection of the cellular structure, and appropriate rigidity and strength of the whole system.

The cellular structure is driven using driving a mechanism which is, in this embodiment, an electric motor, said motor connected to the cellular structure by a belt. However, this solution is known from the state of the art and is thus not part of the novel application.

The embodiment of radial sealing comprises the ring (7), said ring preferably being of man made material and tightly fitting onto the cellular structure, said cellular structure preferably being made of aluminum; the gasket (8), said gasket preferably being made of cloth and in the form of "infinite" stripe; the elastic ring (9), preferably being made of rubber or some other elastomer, said elastic ring (9) pressing the gasket (8) and the ring; the ring (10), preferably made of man made material, said ring (10) pressing the gasket outward toward the cover (11), the cover, preferably made of man made material, preferably injection molded (11); and the connecting element, preferably a bolt for connection of said cover onto the structure (12).

The gasket (8) and the elastic ring (9) can be also joined or combined into a single part having the properties of both: an appropriately low coefficient of friction when compared to the ring (7), an ability to prevent vapor flow, and elastic properties.

The embodiment of the radial sealing provides for the ring (7) to rotate with the cellular structure onto which the ring is fitted while the gasket (8) presses onto the ring from the outside. In this embodiment the gasket (8) is made of cloth, however, other materials with similar properties can be used. The force exerted on the ring (7) by the gasket (8) is derived from the use of the elastic ring (9) which essentially uniformly presses onto the gasket (8). The materials of the ring (7) and the gasket (8) must be chosen having in mind the need for a low coefficient of friction between them and for the ability to prevent vapor flow thereby preventing the flow of humidity in the compartment between the cellular structure and the structure (12) and thereby preventing formation of condensate and resulting ice in this compartment.

The essential feature of the system of radial sealing is also in the elastic property to conform to small movements or deviations from perfect rotation during rotation of the cellular structure without lessening of the sealing function. Good technology of the cellular structure manufacturing should provide for deviation of less than 0,5 mm in both radial and axial direction, however, this condition does not represent a limitation for operation of the invention.

The radial sealing can be manufactured in several versions using the above description (it can be in one part, the cloth can be impregnated with special grease for reduction of the coefficient of friction and to prevent vapor flow, and the gasket can be glued to the elastic ring (9)). If the gasket is in a single part or if the cloth is glued to the elastic ring (9) then the ring (10) affixes directly the elastic ring (9) by pressing outwardly in a radial direction against the cover (11).

The embodiment of the axial sealing comprises the supporting wall, preferably of man made material serving as a support for the cellular structure, as a support for axial gasket, and as a wall to limit the air flow (13); connecting means, preferably a bolt for adjustment of axial tolerance of a gasket (14); connecting means, preferably a nut (15); the bearing, preferably a ball bearing (16); the axial gasket (17), preferably in form of a brush or brushlike cloth such as velvet connected to the supporting wall (13), preferably glued; the cover of the cartridge serving also as the bearing support, preferably of man made material such as plastics (18); a cartridge, preferably of man made material such as plastics (19); the cellular structure, preferably of aluminum foil (20); the supporting structure of the regenerator module (21); the outer layer (22).

The principle of axial sealing is in providing increased resistance to air flow through the gasket (17) which is essentially a very wide brush with short bristles (2 to 3 mm in length according to this embodiment). The flow of air between the areas of fresh and used air is rather small as the gasket is much wider than other measures (20 mm in this embodiment) and as the air which penetrates to certain depth of the gasket may freely flow into the channels of the cellular structure.

The gasket (17) bristles can be very thin and usually do not touch the actual cellular structure or can be cut by the sharp edges of the foil to such a degree that the sealing becomes without contact and the subsequent gasket wear drastically reduced or prevented.

The gasket (17) - brush is, as a rule, glued onto the wall (13) which is affixed to the cover (11) and the supporting structure (21). The axial tolerance of the gasket can be set using connecting-setting elements, preferably the bolts (14), on both sides of the cellular structure, using appropriate adjustment of said setting elements, preferably by screwing and/or unscrewing the bolts (14), the set position being appropriately secured, preferably with the nuts (15). In the embodiment bolts the (14) are used as the connecting-setting elements, said bolts (14) narrowing into respective cylindrical pins, said pins extending into the respective cellular structure bearings (16). In this case the bolts (14) serve as an axially adjustable axis.

The embodiment of an AFS comprises division of air flow through the cellular structure into three flows, whereas it is to be emphasized that state of the art already encompasses regenerator with division of air flow into only two flows. In this embodiment, the flow of countercondensing air (III) is introduced between the fresh air (I) and the used air (II) flows.

The AFS can be achieved using two or three fans according to this invention. The essential advantage of the two fan system is its simplicity. In this case the countercondensing air flow (III) uses the fan (2) which is less burdened than the fan (3) which provides for pressure loss encountered by air flow through the fresh air filter (6). The advantages of three fan system are:
- simple switching on and off of the countercondensing air flow (III) by switching on and off of the fan;
- if the third fan to propel countercondensing air flow (III) is positioned sequentially in relation to the fan (2) one can regulate the volumetric flow III by switching on and off of the third fan. Hence, the cross section earmarked for countercondensing flow can be smaller (figures 2 and 3). If, however, the climate features harsher winters one may add the third fan in a sequential fashion while keeping the cross section earmarked for countercondensing flow unchanged.

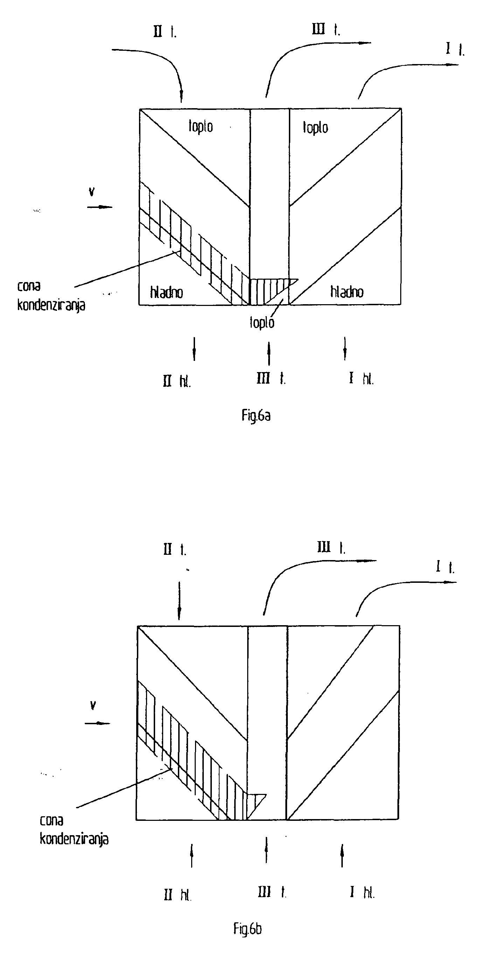

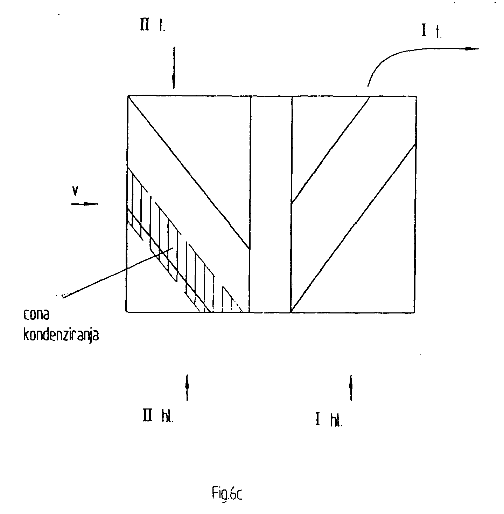

Figure 6 shows the temperature zones during operation of the regenerator. The figure shows an arbitrary surface of a cylinder with radius "r" from the center of the cellular structure cylinder when said surface is unfolded into a plane. The temperature front in this view is angled rather than straight, with letter "a" showing the initial position of the temperature front following the cellular's structure entrance from the cold (the fresh) air into the used air flow (II). On the other hand, the letter "b" shows the position of the temperature front just before the cellular structure exits from the used air flow (II) region into the countercondensing air flow (III). When the used air (II) moves toward the exit it cools down until it reaches the dew point (the relative humidity equals 100%), and this provides for moisture extraction from the air (seen as condensation) which is seen in the figure as the condensation zone. The resulting condensate is deposited on the surfaces within the cellular structure in the form of thin layer which can freeze when temperatures fall below the freezing point. If said frozen layer is not removed during each revolution of the cellular structure said layer thickens until it blocks the air flow through the cellular structure. The AFS then warms up the cellular structure by flow of the countercondensing air flow (III) in the direction opposite from the direction of the used air (II). This melts the thin ice layer and dries up the cellular structure. If the relative humidity of the used air (flow II) equals between 35 and 50% one does not expect large quantities of condensate in the cellular structure. The countercondensing flow (III) and then the fresh air (I) flow then dry the remaining condensate before the temperature of the cellular structure falls significantly. This is particularly important if the condensate freezes to prevent the blockage. On the other hand, when the relative humidity of the used air (II) exceeds certain a point and results in larger quantities of condensate, a combined mechanism needs to be utilized. In such a case this embodiment provides for partial backdraft (figure 6b), and partial countercondensing flow (III) which returns the condensate into the interior. If relative humidity becomes quite large (over 65%) the humidity is mainly reduced by backdraft (figure 6c) or with a combination as in the case of large quantities (figure 6b).

The partial backdraft in the embodiment is achieved by reduction in angular velocity of the cellular structure, and backdraft with even lower angular velocity of the cellular structure.

## Claims

1. A device for local regenerative heating comprising a rotating regenerator featuring alternate flow of used gas from the interior and fresh gas from the reservoir, **characterized in that** alternating with the flows of the used and the fresh air there is a third flow of gas used for drying up of the regenerator, the flow of which is essentially parallel to the flow of fresh gas from the reservoir.

2. A device for local regenerative heating, **characterized in that** it comprises heat regenerative means, backdraft means, countercondensing means, and regulation means connected thereto.

3. A device for local regenerative heating according to any preceding claims, **characterized in that** comprises radially sealing and axially sealing means.

4. A device for local regenerative heating according to any preceding claims, **characterized in that** the gas is air, and the reservoir is the environment.

5. A device for local regenerative heating according to any preceding claims, **characterized in that** the third flow of gas prevents the freezing of the water removed from the gas.

6. A device for local regenerative heating according to any preceding claims, **characterized in that** it comprises an anti freezing system comprising at least essentially divided air flows whereby a countercondensing air flow (III) is positioned between a used air flow (II), and a fresh air flow (I) to remove condensate from the rotating regenerator.

7. A device for local regenerative heating according to any preceding claims, **characterized in that** it comprises a regenerator and driving mechanism (1), a fan for propelling used air (II) and countercondensing (III) air (2), a fan for propelling fresh (I) air (3), a module being a structure made of insulation material with appropriate construction properties (4), connecting pipes through a wall (5), a fresh air filter (6), a flow of fresh air (I), a flow of used air (II), and a flow of countercondensing air (III) whereby the fresh air enters through an opening in front of the fresh air fan (3) propelling said air through a cellular structure (20).

8. A device for local regenerative heating according to any preceding claims, **characterized in that** the cellular structure (20) comprises of double foil, preferably aluminum, one of the foils being smooth, the other of the foils being wavy and being put on the top of one as to form air passage, the double foil being coiled in the form of a spiral onto a cartridge (19) said cartridge (19) preferably being of man made material; the resulting coil being formed into cylindrical form and layers of foil connected one to another.

9. A device for local regenerative heating according to any preceding claims, **characterized in that** the foils which comprise the cellular structure (20) are 0,02 mm to 0,1 mm thick, preferably 0,3 mm to 0,5 mm, and perforated 6 to 11%.

10. A device for local regenerative heating according to any preceding claims, **characterized in that** in comprises the cellular structure (20) which is surrounded with an outer layer made of material enabling good contact between said outer layer and a driving mechanism, preferably a belt, said material preferably being elastomer.

11. A device for local regenerative heating according to any preceding claims, **characterized in that** it comprises a system for radial sealing comprising: a ring (7), preferably of man made material, said ring tightly fitting the cellular structure and said cellular structure preferably being of aluminum; a gasket, preferably of cloth, preferably in a the form of an infinite strip (8); an elastic ring (9), preferably of rubber or other elastomer, said ring (9) pressing the gasket (8) outward onto a cover (11); the cover, preferably of man made material, preferably injection molded (11); a connecting element, preferably a bolt, for connecting said cover onto a structure (12).

12. A device for local regenerative heating according to any preceding claims, **characterized in that** it comprises a system for axial sealing comprising: a supporting wall, preferably of man made material (13); connecting means, preferably a bolt, for setting the axial tolerance of a gasket (14); connecting means, preferably a nut (15); a bearing, preferably a ball bearing (16); an axial gasket (17), preferably in the form of a brush or brush-like cloth such as velvet, connected to the supporting wall (13), preferably glued; a cover for a cartridge serving also as a bearing support, preferably of man made material such as plastics (18); and a cartridge, preferably of man made material such as plastics (19).

13. A device for local regenerative heating according to any preceding claims, **characterized in that** the axial gasket (17) comprises bristles of 2 to 3 mm in length.

14. A method for local regenerative heating using a rotating regenerator, **characterized in that** it comprises at least the following steps: exit of used air from interior through a cellular structure rotating in a housing; entrance of fresh air through the cellular structure, said cellular structure previously heated by exiting used air; and recirculation of warm air in direction parallel to cold air.

15. A method for local regenerative heating according to claim 14, **characterized in that** comprises the use of at least two fan, one of the fans being used for used air flow (II) and for countercondensing air flow (III) with their respective ratio regulated using regulating means, and another being used for for fresh air flow (I).

16. A method for local regenerative heating according to any claim 14 or 15, **characterized in that** it comprises the use of at least three fans, one of the fans beingused for fresh air flow (I), another fan being used for countercondensing air flow (III), and the remaining fan being used for used air flow (III).

17. A method for local regenerative heating according to any of claims 14, 15 or 16, **characterized in that** the countercondensing air flow (III) is used for heating the rotating regenerator in order to increase the temperature of the air above the dew temperature, and for removal of the condensate into the interior of the ventilated area.

18. A device for local regenerative heating according to any preceding claim, **characterized in that** the device is performing according to the method for local regenerative heating from any of claims 14, 15, 16 or 17.
